Europäisches Patentamt

(19) European Patent Office

Office européen des brevets

(11) Numéro de publication: **0 206 861 B1**

(12) **FASCICULE DE BREVET EUROPEEN**

(51) Int. Cl.⁴: **B 60 R 25/02**

(45) Date de publication du fascicule du brevet:
**17.11.88**

(21) Numéro de dépôt: **86401068.1**

(22) Date de dépôt: **21.05.86**

(54) Dispositif antivol pour colonne de direction de véhicule automobile.

(30) Priorité: **28.05.85 FR 8507990**

(43) Date de publication de la demande:
**30.12.86 Bulletin 86/52**

(45) Mention de la délivrance du brevet:
**17.11.88 Bulletin 88/46**

(84) Etats contractants désignés:
**AT BE CH DE GB IT LI LU NL SE**

(56) Documents cités:
**FR - A - 2 142 995**
**FR - A - 2 161 392**
**FR - A - 2 362 038**
**FR - A - 2 523 532**

(73) Titulaire: **ECIA - EQUIPEMENTS ET COMPOSANTS POUR L'INDUSTRIE AUTOMOBILE, F-25400 Audincourt (FR)**

(72) Inventeur: **Clerc, Michel, 27 rue des Graviers, F-25700 Valentigney (FR)**
Inventeur: **Barnabe, Jean-Pierre, 17 Quartier des Combes St Germain, F-25700 Valentigney (FR)**
Inventeur: **Mouhot, Frédéric, 5, rue des Vergers, F-25420 Voujeaucourt (FR)**

(74) Mandataire: **Moncheny, Michel et al, c/o Cabinet Lavoix 2 Place d'Estienne d'Orves, F-75441 Paris Cedex 09 (FR)**

# Description

Les dispositifs antivol pour colonne de véhicule automobile comportent actuellement un verrou, qui est fixé sur la carrosserie et dont le pêne s'emboîte dans un fente du tube-enveloppe de la colonne, ainsi que dans une fente correspondante de l'axe de volant lui-même ou d'un organe solidaire de cet axe.

De tels systèmes assurent un maintien efficace du volant et interdisent totalement la rotation de celui-ci de telle sorte qu'en cas de tentative de vol l'effort exercé par le volent tend à provoquer la rupture soit de l'axe de volant lui-même, soit du tube-enveloppe de la colonne de direction. Il est donc nécessaire, après une telle tentative, de remplacer l'ensemble de cette colonne.

Il est également connu d'après le FR-A-2 142 995 de relier le manchon et l'arbre par des dentures axiales complémentaires débrayables. Le manchon est alors repoussé élastiquement en position embrayée tandis que le couple exercé sur l'arbre tend à l'en écarter jusqu'à permettre la rotation de l'arbre et le franchissement d'une dent. La conduite du véhicule est pratiquement impossible mais la rupture des organes de la colonne est évitée.

Toutefois, chaque franchissement d'une dent suppose un déplacement du manchon au moins axialement par rapport à l'arbre et par suite par rapport au pêne emboîté dans la fente du manchon. Le pêne est ainsi soumis à des efforts axiaux répétés qui sont nuisibles à sa résistance.

La présente invention a pour but d'éviter cet inconvénient en fournissant un dispositif antivol qui, tout en interdisant la conduite du véhicule, n'entraîne, lors d'une tentative de vol, ni rupture des organes de la direction, ni risque de détérioration du pêne.

Cette invention a en effet pour objet un dispositif antivol suivant le préambule de la revendication 1, caractérisé en ce que le manchon a une section droite comportant au moins deux faces planes et est enfilé coaxialement autour d'une portion de l'axe de volant qui a une section sensiblement en forme de polygone régulier, de sorte que lorsque le manchon est immobilisé par le pêne, la rotation de l'axe de volant est contrecarrée par un couple résistant, périodiquement variable.

Selon un mode de réalisation, le nombre des côtés du polygone de l'axe est double de celui des faces planes du manchon. Ces faces planes peuvent alors être en contact direct avec l'axe ou être en contact avec une bague élastiquement déformable, interposée entre les deux organes.

Selon un autre mode de réalisation, le manchon et la portion d'axe de volant qu'il entoure ont le même nombre de faces planes et sont reliés entre eux par une bague déformable.

Dans tous les cas, lorsque le dispositif antivol est en fonctionnement, l'utilisation du volant est rendue pratiquement impossible car le déplacement en rotation de l'axe de direction exige un effort qui varie, tout en restant toujours très important. Par contre, cette rotation n'entraîne pas celle du manchon traversé par le pêne du verrou et ne risque, par suite, nullement de détruire ce manchon ni la colonne de direction.

La description ci-dessous d'un mode de réalisation donné à titre d'exemple non limitatif, et représenté aux dessins annexés, fera d'ailleurs ressortir les avantages et caractéristiques de l'invention.

Sur ces dessins:

la fig. 1 est une vue partielle, en coupe axiale suivant la ligne 1-1 de la figure 2, du dispositif antivol selon l'invention, monté sur une colonne de direction, le pêne de verrouillage ayant été omis pour ne pas compliquer le dessin;

la fig. 2 est une coupe transversale, selon la ligne 2-2 de la figure 1;

la fig. 3 est une vue en coupe axiale d'un dispositif antivol selon une variante de réalisation de l'invention;

la fig. 4 est une coupe transversale, selon la ligne 4-4 de la figure 3, de l'axe de volant et du manchon qui l'entoure;

la fig. 5 est une vue analogue à la figure 1 d'une autre variante de réalisation;

la fig. 6 est une vue en coupe suivant la ligne 6-6 de la figure 5.

La colonne de direction représentée partiellement comporte, de la manière habituelle, un tube-enveloppe cylindrique 1, qui est traversé par un axe de volant 2. Le tube-enveloppe 1 est percé de deux fentes diamétralement opposées 4, destinées à permettre le passage du pêne d'un verrou, qui n'a pas été représenté car il peut être de tout type approprié pour une telle application.

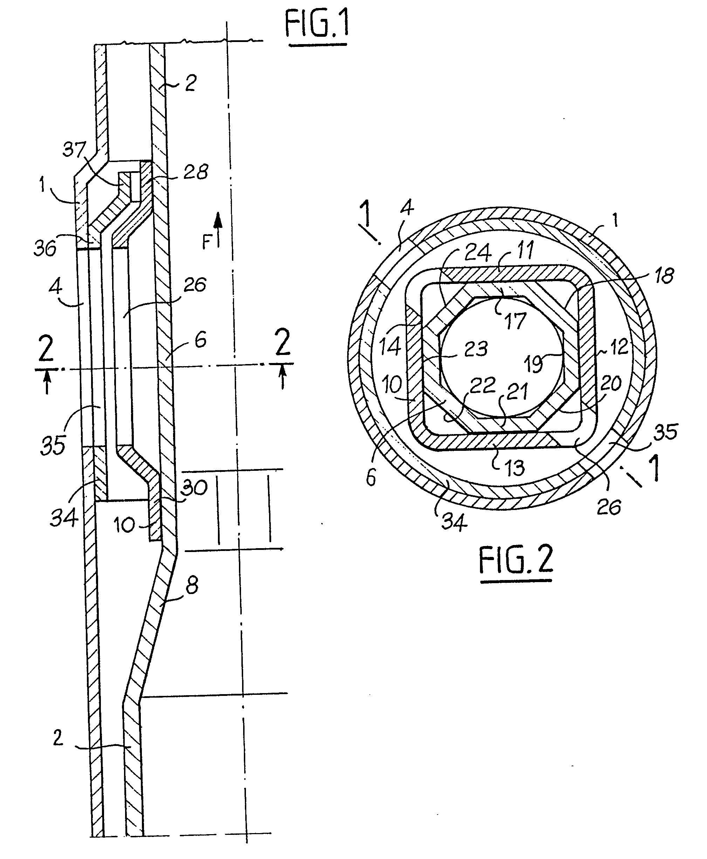

Au droit des fentes 4 l'axe de volant 2 comporte une portion rétrécie 6 ayant en section la forme d'un polygone régulier, par exemple, comme dans le mode de réalisation des figures 1 et 2, la forme d'un octogone. La portion 6, de section octogonale, est évasée à l'une de ses extrémités en 8, pour rejoindre la forme circulaire normale de l'axe de volant 2.

Cette partie rétrécie est entourée par un manchon 10 qui est coaxial à l'axe 2 et a, comme le montre la figure 2, une section de forme carrée, c'est-à-dire comportant quatre faces planes, respectivement 11, 12, 13 et 14. En position normale, ces quatre faces correspondent à quatre 17, 19, 21, 23 des faces planes de l'axe 6, les quatre autres faces planes 18, 20, 22, 24 de la portion d'axe 6 se trouvant en regard des angles du manchon 10, qui sont de préférence arrondis (fig. 2).

Dans deux de ces angles, diamétralement opposés, le manchon 10 comporte une fente 26, qui est ainsi placée en regard de l'une des fentes 4 du tube-enveloppe 1 mais est écartée de l'axe de volant 6. Au-dessus et au-dessous de chacune des fentes 26 le manchon est rétréci pour se terminer par une portion 28 ou 30, qui a une forme analogue à celle de la partie correspondante de l'axe 2 et entoure celle-ci avec un très léger jeu. La portion inférieure 30 s'étend ainsi jusqu'à la partie tronconique 8 de l'axe 2.

Autour du manchon 10 le tube-enveloppe 1 est solidaire d'un renfort 34 fixé sur sa face interne et percé de deux fentes 35 correspondant aux fentes 4 et 26. A sa partie supérieure le renfort 34 comporte une portion tronconique 36 suivie d'une portion cylindrique 37 entourant l'extrémité 28 du manchon 10. La portion cylindrique 37 à un diamètre interne inférieur au diamètre externe du manchon 10, de sorte qu'elle interdit le déplacement axial de ce manchon dans la direction correspondant à la flèche F de la figure 1.

Tout déplacement en sens inverse de l'axe de volant 2 et du manchon 10 par rapport à la colonne 1 est par ailleurs interdit par le volant lui-même.

Lorsque le dispositif antivol est en fonctionnement, c'est-à-dire lorsque chaque pêne du verrou (non représenté) est introduit successivement dans les fentes 4, 35 et 26, le manchon 10 est rendu solidaire du tube-enveloppe 1 et, par suite, immobilisé en rotation. Un effort sur le volant pour tenter de faire tourner celui-ci, en vue de conduire le véhicule, en faisant tourner la portion polygonale 6 de ce volant par rapport au manchon 10 immobilisé est contrecarré par le contact entre les faces en regard 17, 11, 19, 12 ... et la difficulté pour les arêtes de la portion d'axe prismatique 6 de se déplacer le long des faces du manchon 10. Il est clair que la couple qui s'oppose à ce déplacement relatif de l'axe de volant par rapport au manchon est maximum lorsque les arêtes doivent franchir la partie centrale des côtés 11, 12, 13 et 14 du manchon et décroît progressivement lorsque cette zone est franchie, jusqu'au moment où l'arête fait face à l'angle du manchon où il devient pratiquement nul. Le couple croît à nouveau si la rotation continue et reprend périodiquement la même valeur.

La conduite du véhicule suppose donc l'exercice d'un effort extrêmement important sur le volant et surtout d'un effort qui varie de manière périodique, ce qui rend impossible une conduite normale et prolongée. Toutefois, même si le voleur exerce un effort extrêmement important sur le volant et sur l'axe 2, à aucun moment il ne risque de rompre le manchon 10 ni, par suite, le tube de colonne 1. La détérioration du véhicule est donc évitée.

De la même manière, il lui est impossible de démonter l'axe de volant 2 par un déplacement axial, car le rétreint du renfort 34 l'interdit. On obtient donc un dispositif antivol qui présente à la fois une grande efficacité et une grande sécurité.

Bien entendu, l'axe de volant peut avoir, dans sa portion rétrécie 6, toute forme polygonale désirée; une section en forme de polygone régulier est toutefois préférable.

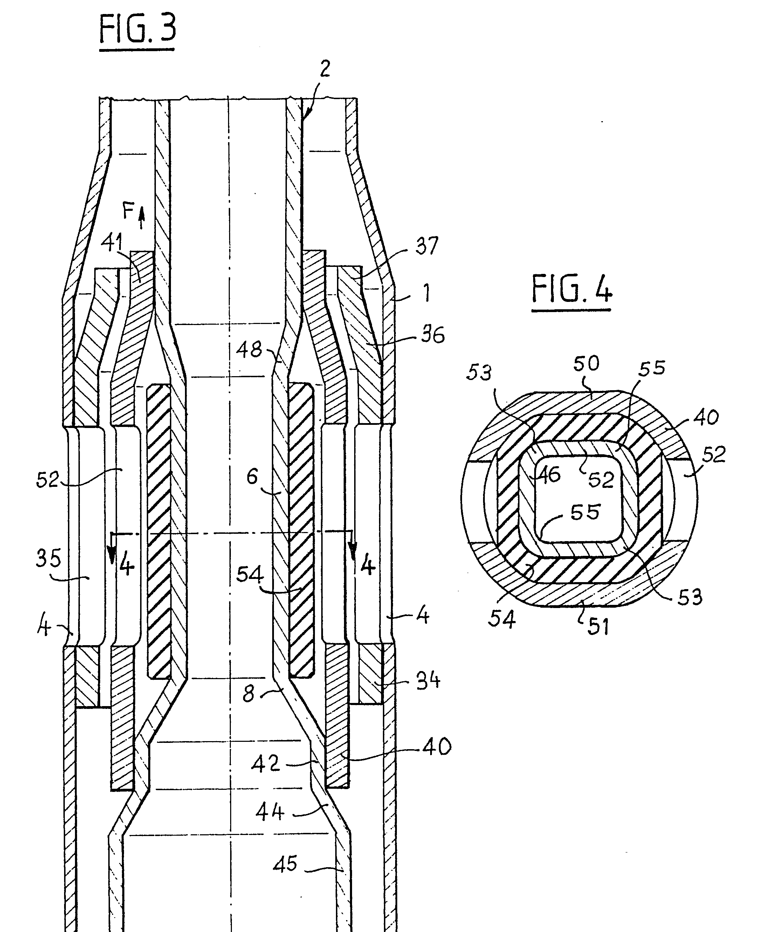

Dans la variante de réalisation représentée sur les figures 3 et 4, la portion rétrécie 46 de l'axe de volant 2 a la forme d'un carré dont les angles sont arrondis. Cette portion 46 est évasée à chacune de ses extrémités, en 8 et 48, pour rejoindre la forme circulaire normale de l'axe de volant 2. Toutefois, à la partie inférieure de la portion 6, l'évasement 8 conserve une forme ovale et est prolongé par une portion cylindrique 42 suivie par une portion conique 44 de jonction à la partie cylindrique de plus grand diamètre 45 de l'axe.

Le manchon 40 qui entoure la partie rétrécie 46 a, comme le montre la figure 4, une section droite en forme de cercle ovalisé, c'est-à-dire comportant deux méplats ou faces planes, respectivement 50 et 51, diamétralement opposés, chacune de ces faces planes 50, 51 correspondant à une face plane 52 du tube 46.

Le manchon 40 serre sur ce tube 46 une bague 54 en matériau élastiquement déformable, par exemple en élastomère ou analogue. La bague 54 a une section analogue à celle du tube 46 et une épaisseur suffisante pour être serrée de façon relativement importante entre ce tube et le manchon 40. La longueur de cette bague 54 est sensiblement la même que celle de la portion polygonale 46 de l'axe 2, entre les deux parties évasées 8 et 48. Par contre, le manchon 10 se prolonge au-delà de chacun des extrémités de la bague 54, d'une part le long de la portion cylindrique 42 jusqu'à la partie tronconique 44, et d'autre part autour de la portion tronconique 48 et au-delà de celle-ci. A cette extrémité le manchon 40 est rétréci progressivement et se termine par une portion 41 dont le diamètre n'est plus que très légèrement supérieur à celui de l'axe 2. Comme dans le mode de réalisation précédent, le renfort 34 solidaire du tube-enveloppe 1 est interposé entre le manchon 40 et ce tube-enveloppe.

De même, le manchon 40 comporte, en deux points diamétralement opposées, des fentes 52 qui sont chacune en regard d'une fente 35 et d'une fente 4. Ces fentes sont ainsi pratiquées dans la partie circulaire du manchon 40 et se trouvent légèrement écartées de la bague 54 (fig. 4).

Lorsque le manchon 40 est immobilisé par le pêne de verrouillage, toute rotation de l'axe de volant et de la portion polygonale 46 provoque un écrasement de la bague élastique 54, qui croît progressivement au fur et à mesure du déplacement de l'une ou l'autre des paires d'angles diamétralement opposées 53 ou 55 du tube 46, puis diminue lorsque ces mêmes angles 53 ou 55 se rapprochent de la portion circulaire du manchon 40. La bague oppose ainsi à toute rotation relative du volant et du manchon un couple résistant important, qui varie périodiquement.

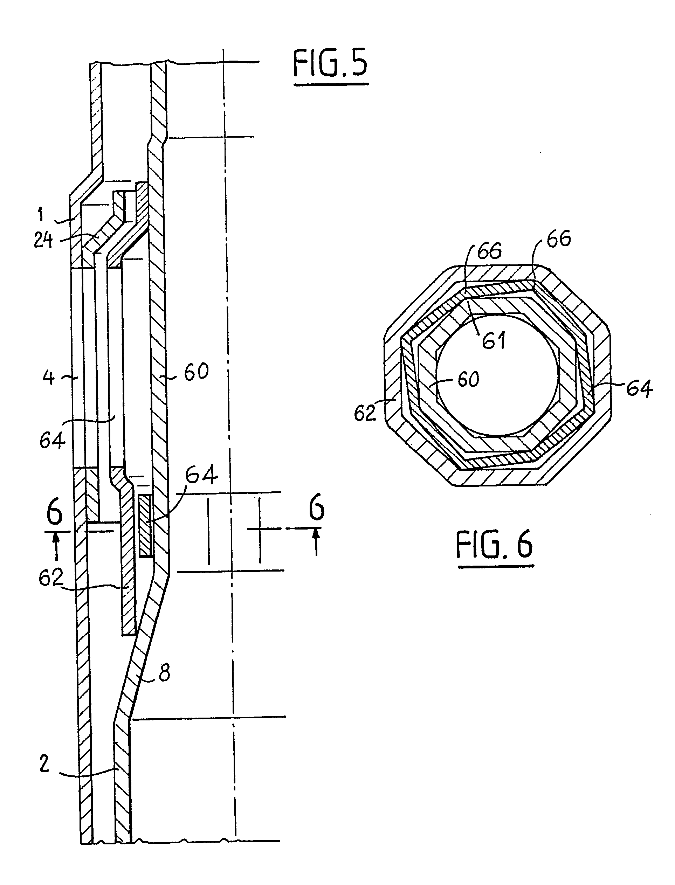

Selon une autre variante de réalisation représentée sur les figures 5 et 6, le manchon au lieu d'avoir un nombre de faces planes moitié de celui de la portion polygonale rétrécie de l'axe de volant, a le même nombre de côtés. Sur les figures 5 et 6 la portion rétrécie 60 de l'axe 2 a en effet une section en forme d'octogone régulier et est entourée par un manchon 62, également de forme octogonale. Ce manchon 62 et la partie rétrécie 60 sont coaxiaux et le manchon se prolonge vers le bas, en dessous des fentes, jusqu'à son contact avec la partie évasée 8 de l'axe.

Entre le manchon et la portion prismatique 60 est intercalée une bague métallique 64 déformable. Cette bague est mince et formée en acier à haute caractéristiques élastiques. Elle a également une forme octogonale mais comporte quatre angles égaux alternant avec quatre angles d'une autre valeur. Par suite, comme le montre la figure 6, quatre de ses sommets 66 sont bloqués dans les angles correspondants 63 du manchon 62, tandis que ses autres sommets 68 appuient sur les arêtes 61 du prisme 60 de l'axe de volant.

Comme dans les modes de réalisation précédents, lorsque le manchon 62 est immobilisé, toute rotation de l'axe de volant 2 oblige les arêtes 61 de la portion prismatique rétrécie 60 à repousser la bague 64 qui lui oppose un couple très important, d'abord croissant jusqu'à un maximum, puis décroissant progressivement pour s'annuler ou presque lorsque l'arête 61 arrive en regard de l'arête 66 bloquée dans le manchon 62, et pour croître à nouveau si la rotation se poursuit.

Par contre, dès que l'antivol est déverrouillé, la conduite du véhicule s'effectue normalement.

En outre, la disposition relative du manchon, de l'axe 2 et du renfort, et le jeu ménagé entre eux permettent à l'ensemble de la colonne de subir éventuellement de faibles chocs frontaux sans que le dispositif antivol soit détérioré.

Bien entendu, d'autres formes polygonales pourraient être envisagées pour l'axe de volant, la forme du manchon étant naturellement adaptée en conséquence.

## Revendications

1. Dispositif antivol pour colonne de direction de véhicule automobile, comportant un verrou monté en un point fixe et destiné à coopérer avec une fente d'un manchon qui entoure l'axe de volant, caractérisé en ce que le manchon (10, 40, 62) a une section droite comportant au moins deux faces planes (11, 12, 50, 51) et est enfilé coaxialement autour d'une portion (6, 46, 60) de l'axe de volant, qui a une section sensiblement en forme de polygone régulier de sorte que, lorsque le manchon est immobilisé par le pêne du verrou, la rotation de l'axe de volant (2) est contrecarrée par un couple résistant qui varie de manière périodique.

2. Dispositif suivant la revendication 1, caractérisé en ce que la portion (6, 46, 60) de section polygonale de l'axe est une portion rétrécie, terminée à l'une de ses extrémités par une partie évasée (8) de retenue axiale du manchon.

3. Dispositif suivant l'une des revendications 1 et 2, caractérisé en ce que le manchon (10) a une section en forme de polygone régulier dont les faces (11, 12, 13, 14) sont en contact direct avec des faces correspondantes (17, 19, 21, 23) du polygone de l'axe, ce polygone ayant un nombre de côtés double de celui du polygone du manchon et les fentes (26) étant ménagées dans les angles du manchon (10).

4. Dispositif suivant l'une des revendications 1 et 2, caractérisé en ce qu'il comporte une bague déformable (54, 64) interposée entre le manchon (40, 62) et la portion de section polygonale (46, 60) de l'axe de volant.

5. Dispositif suivant la revendication 4, caractérisé en ce que la bague (54) est une bague épaisse en matière élastiquement déformable, serrée sur tout le pourtour de l'axe de volant par le manchon.

6. Dispositif suivant la revendication 5, caractérisé en ce que la bague (54) a une section analogue à celle de la portion polygonale (46) de l'axe et une hauteur analogue à celle de la partie rétrécie de ce dernier.

7. Dispositif suivant la revendication 4, caractérisé en ce que la bague (64) est une bague étroite et mince en acier à hautes caractéristiques élastiques.

8. Dispositif suivant la revendication 7, caractérisé en ce que la bague (64) a une forme polygonale et est interposée entre un manchon (62) et un axe de volant (60) dont les sections constituent deux polygones réguliers semblables.

9. Dispositif suivant la revendication 8, caractérisé en ce que la bague déformable (64) est en contact alternativement avec un angle du manchon et une arête de l'axe.

10. Dispositif suivant l'une des revendications précédentes, caractérisé en ce qu'il comporte un renfort (34) solidaire de la face interne du tube-enveloppe (1) de la colonne et ayant une extrémité (37) qui est rétrécie parallèlement à celle (28) du manchon (10, 40, 62).

## Patentansprüche

1. Diebstahlsicherungsvorrichtung für Kraftfahrzeuglenksäule mt einer in einem festen Punkt angebrachten und zur Zusammenarbeit mit einem Schlitz einer die Lenkradachse umgebenden Hülse bestimmten Verriegelungsvorrichtung, dadurch gekennzeichnet, dass die Hülse (10, 40, 62) einen geraden Querschnitt mit mindestens zwei ebenen Flächen (11, 12, 50, 51) hat und koaxial um einen einen Querschnitt annähernd in Form eines regelmässigen Vielecks aufweisenden Abschnitt (6, 46, 60) der Lenkradachse angeordnet ist, derart, dass der Drehung der Lenkradachse 62) ein periodisch schwankendes Gegenmoment entgegenwirkt, wenn die Hülse durch den Riegel der Verriegelungsvorrichtung gesperrt wird.

2. Vorrichtung nach Patentanspruch 1, dadurch gekennzeichnet, dass der Achsenabschnitt (6, 46, 60) mit vieleckigem Querschnitt ein verengter Abschnitt ist, der an einem seiner Enden in einem konisch erweiterten Teil (8) zur axialen Befestigung der Hülse endet.

3. Vorrichtung nach einem der Patentansprüche 1 und 2, dadurch gekennzeichnet, dass die Hülse (10) einen Querschnitt in Form eines regelmässigen Vielecks aufweist, dessen Seiten (11, 12, 13, 14) unmittelbar mit entsprechenden Seiten (17, 19, 21, 23) des Vielecks der Achse in Kontakt sind, wobei dieses Vieleck eine doppelt so grosse Anzahl Seiten hat, wie das Vieleck der Hülse und die Schlitze (26) in den Ecken der Hülse (10) ausgespart sind.

4. Vorrichtung nach einem der Patentansprüche 1 und 2, dadurch gekennzeichnet, dass sie einen zwischen der Hülse (40, 62) und dem Abschnitt mit vieleckigem Querschnitt (46, 60) der Lenkradachse angeordneten verformbaren Ring (54, 64) aufweist.

6. Vorrichtung nach Patentanspruch 4, dadurch gekennzeichnet, dass der Ring (54) ein dicker Ring aus elastisch verformbarem Material ist, der durch die Hülse auf den ganzen äusseren Umfang der Lenkradachse geklemmt wird.

6. Vorrichtung nach Patentanspruch 5, dadurch gekennzeichnet, dass der Ring (54) einen dem Querschnitt des vieleckigen Abschnitte (46) der Achse ähnlichen Querschnitt aufweist und eine Höhe ähnlich der ihres verengten Teils.

7. Vorrichtung nach Patentanspruch 4, dadurch gekennzeichnet, dass der Ring (64) ein schmaler und dünner Ring aus einem Stahl mit hohen Elastizitätswerten ist.

8. Vorrichtung nach Patentanspruch 7, dadurch gekennzeichnet, dass der Ring (64) eine Vielecksform hat und zwischen einer Hülse (62) und einer Lenkradachse (60) angeordnet ist, deren Querschnitte zwei ähnliche, regelmässige Vielecke sind.

9. Vorrichtung nach Patentanspruch 8, dadurch gekennzeichnet, dass der verformbare Ring (64) entweder mit einem Winkel der Hülse oder mit einer Kante der Achse in Kontakt ist.

10. Vorrichtung nach einem der vorangehenden Patentansprüche, dadurch gekennzeichnet, dass sie eine Verstärkung (34) aufweist, die mit der Innenfläche des Stützrohrs (1) der Säule verbunden ist und ein parallel zum Ende (28) der Hülse (10, 40, 62) verengtes Ende (37) aufweist.

## Claims

1. Antitheft device for a motor vehicle steering column having a latch mounted at a fixed point and serving to cooperate with a sleeve surrounding the steering wheel shaft, characterized in that the sleeve (10, 40, 62) has a cross-section with at least two planar faces (11, 12, 50, 51) and is coaxially threaded around a portion (6, 46, 60) of the steering wheel shaft, whose section is substantially shaped like a regular polygon in such a way that when the sleeve is immobilised by the bolt of the latch, the rotation of the steering wheel shaft (2) is opposed by an opposing torque, which varies periodically.

2. Device according to claim 1, characterized in that the portion (6, 46, 60) of the shaft having a polygonal section is a narrowed portion, terminated at one of its ends by a widened portion (8) for axially securing the sleeve.

3. Device according to one of the claims 1 and 2, characterized in that the sleeve (10) has a section in the form of a regular polygon, whose faces (11, 12, 13, 14) are in direct contact with the corresponding faces (17, 19, 21, 23) of the polygon of the shaft, said polygon having a number of sides twice that of the polygon of the sleeve and the slots (26) are arranged in the angles of sleeve (10).

4. Device according to one of the claims 1 and 2, characterized in that it has a deformable ring (54, 64) placed between the sleeve (40, 62) and the portion (46, 60) with the polygonal cross-section of the steering wheel shaft.

5. Device according to claim 4, characterized in that the ring (54) is a thick ring made from an elastically deformable material and locked over the entire circumference of the steering wheel shaft by the sleeve.

6. Device according to claim 5, characterized in that the ring (54) has a cross-section identical to that of the polygonal portion (46) of the shaft and a height identical to that of the narrowed portion of the latter.

7. Device according to claim 4, characterized in that the ring (64) is a narrow, thin ring made from steel with high elastic characteristics.

8. Device according to claim 7, characterized in that the ring (64) is polygonal and is placed between a sleeve (62) and a steering wheel shaft (60), whose sections constitute two similar regular polygons.

9. Device according to claim 8, characterized in that the deformable ring (64) is in contact alternately with an angle of the sleeve and an edge of the shaft.

10. Device according to one of the preceding claims, characterized in that it has a reinforcement plate (34) integral with the inner face of the envelope tube (1) of the column and having an end (37) which is narrowed parallel to that (28) of sleeve (10, 40, 62).

FIG.1

FIG.2

## FIG. 3

## FIG. 4

FIG.5

FIG. 6